(19) Europäisches Patentamt / European Patent Office / Office européen des brevets

(11) EP 4 456 191 A1

(12) EUROPEAN PATENT APPLICATION
published in accordance with Art. 153(4) EPC

(43) Date of publication:
30.10.2024 Bulletin 2024/44

(21) Application number: 21969401.5

(22) Date of filing: 29.12.2021

(51) International Patent Classification (IPC):
*H01M 4/485* (2010.01) *H01M 4/525* (2010.01)
*H01M 10/0525* (2010.01)

(52) Cooperative Patent Classification (CPC):
Y02E 60/10

(86) International application number:
PCT/CN2021/142396

(87) International publication number:
WO 2023/123026 (06.07.2023 Gazette 2023/27)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: **Ningde Amperex Technology Limited**
**Zhangwan Town, Jiaocheng District**
**Ningde City**
**Fujian 352100 (CN)**

(72) Inventor: **WANG, Kefei**
**Ningde City, Fujian 352100 (CN)**

(74) Representative: **Icosa**
**83 avenue Denfert-Rochereau**
**75014 Paris (FR)**

# (54) ELECTROCHEMICAL DEVICE AND ELECTRONIC DEVICE

(57) An electrochemical device includes: a positive electrode, a negative electrode, and an electrolyte solution. The positive electrode includes a positive current collector and a positive active material layer formed on the positive current collector. The positive active material layer includes a positive active material. The positive active material includes a first element. The first element includes at least one of lanthanum, yttrium, cerium, or tungsten. Based on a mass of the positive active material, a mass percentage of the first element is a%, satisfying: a ≤ 1. The electrolyte solution includes a propionate ester and a cyano-containing compound. The electrochemical device exhibits a reduced voltage drop and improved safety at high temperature and high voltage.

EP 4 456 191 A1

## Description

### TECHNICAL FIELD

This application relates to the field of energy storage, and in particular, to an electrochemical device and an electronic device, especially a lithium-ion battery.

### BACKGROUND

In recent years, the demand for electrochemical devices (for example, lithium-ion batteries) is increasing significantly with the rapid development of electronic products such as smartphones, tablet computers, and smart wearables. Consumers are requiring higher energy density and safety of the lithium-ion batteries to adapt to different service durations and operating environments of the electronic products.

The energy density of a lithium-ion battery is typically improved by using high-voltage lithium cobalt oxide (4.4 V or above) as a positive active material and using graphite of a high capacity and a high compaction density as a negative electrode material. However, with the increase of the temperature and voltage, the stability of lithium cobalt oxide deteriorates, and a commonly used electrolyte solution is prone to decompose, thereby deteriorating the performance of the lithium-ion battery.

In view of this, it is necessary to provide an electrochemical device and an electronic device of performance improved at high temperature and high voltage.

### SUMMARY

Some embodiments of this application provide an electrochemical device and an electronic device that exhibit a reduced voltage drop and improved safety at high temperature and high voltage to solve some problems in the prior art to some extent.

According to one aspect of this application, this application provides an electrochemical device. The electrochemical device includes: a positive electrode, a negative electrode, and an electrolyte solution. The positive electrode includes a positive current collector and a positive active material layer formed on the positive current collector. The positive active material layer includes a positive active material. The positive active material includes a first element. The first element includes at least one of lanthanum, yttrium, cerium, or tungsten. Based on a mass of the positive active material, a mass percentage of the first element is a%, satisfying: $a \leq 1$. The electrolyte solution includes a propionate ester and a cyano-containing compound.

According to an embodiment of this application, the positive active material further includes a second element. The second element includes at least one of aluminum, magnesium, titanium, or zirconium.

According to an embodiment of this application, based on a mass of the electrolyte solution, an aggregate mass percentage of the propionate ester and the cyano-containing compound is b%, and a and b satisfy: $0.1 \leq a \times b \leq 20$.

According to an embodiment of this application, $0.2 < a \times b \leq 15$.

According to an embodiment of this application, $0.01 \leq a \leq 1$.

According to an embodiment of this application, based on a mass of the electrolyte solution, an aggregate mass percentage of the propionate ester and the cyano-containing compound is b%, and b ranges from 5 to 65.

According to an embodiment of this application, based on a mass of the electrolyte solution, a mass percentage of the propionate ester is x%, a mass percentage of the cyano-containing compound is y%, and x and y satisfy: $1 \leq x/y \leq 20$.

According to an embodiment of this application, based on a mass of the electrolyte solution, a mass percentage of the propionate ester is x%, and x ranges from 5 to 50.

According to an embodiment of this application, based on a mass of the electrolyte solution, a mass percentage of the cyano-containing compound is y%, and y ranges from 0.1 to 15.

According to an embodiment of this application, a mass percentage of the positive active material in the positive active material layer is M%, and M ranges from 95 to 99. Based on a mass of the electrolyte solution, a mass percentage of the propionate ester is x%, and M and x satisfy: $1.5 \leq M/x \leq 18$.

According to an embodiment of this application, an average particle size of the positive active material is D μm, and D ranges from 5 to 30. Based on a mass of the electrolyte solution, a mass percentage of the cyano-containing compound is y%, and D and y satisfy: $1 \leq D/y \leq 20$.

According to an embodiment of this application, the propionate ester includes at least one of ethyl propionate or propyl propionate.

According to an embodiment of this application, the cyano-containing compound includes at least one of: succinonitrile, glutaronitrile, adiponitrile, 1,5-dicyanopentane, 1,6 -dicyanohexane, tetramethyl succinonitrile, 2-methyl glutaronitrile, 2,4-dimethyl glutaronitrile, 2,2,4,4-tetramethyl glutaronitrile, 1,4-dicyanopentane, 1,2-dicyanobenzene,

1,3-dicyanobenzene, 1,4-dicyanobenzene, ethylene glycol bis(propionitrile)ether, 3,5-dioxa-pimelonitrile, 1,4-bis(cyanoethoxy)butane, diethylene glycol bis(2-cyanoethyl)ether, triethylene glycol bis(2-cyanoethyl)ether, tetraethylene glycol bis(2-cyanoethyl)ether, 1,3-bis(2-cyanoethoxy)propane, 1,4-bis(2-cyanoethoxy)butane, 1,5-bis(2-cyanoethoxy)pentane, ethylene glycol bis(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

According to an embodiment of this application, the electrolyte solution further includes at least one of lithium difluorophosphate or a compound represented by Formula I:

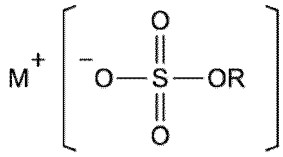

(Formula I)

In the formula above, $M^+$ represents a quaternary ammonium cation or an imidazole cation, and R represents a $C_1$ to $C_5$ alkyl group.

According to an embodiment of this application, the electrolyte solution further includes at least one of fluoroethylene carbonate, 1,3-propane sultone, ethylene sulfate, vinylene carbonate, or 1-propyl phosphate cyclic anhydride.

According to an embodiment of this application, the positive active material includes at least one of a lithium cobalt oxide or a tungsten-containing ternary positive active material, and the lithium cobalt oxide contains at least one of lanthanum, yttrium, or cerium.

According to another aspect of this application, this application provides an electronic device. The electronic device includes the electrochemical device according to this application.

The positive active material layer used in this application exhibits improved interfacial stability in a case of thermal runaway, and can sufficiently suppress the voltage drop of the electrochemical device at high voltage and high temperature. Used together with an electrolyte solution that contains a propionate ester and a cyano-containing compound, the positive active material layer can improve the high-temperature safety of the electrochemical device significantly.

Additional aspects and advantages of some embodiments of this application will be partly described or illustrated herein later or expounded through implementation of an embodiment of this application.

## DETAILED DESCRIPTION OF EMBODIMENTS

Some embodiments of this application will be described in detail below. No embodiment of this application is to be construed as a limitation on this application.

Unless otherwise expressly specified, the following terms used herein have the meanings defined below.

In the detailed description of embodiments and claims, a list of items recited by using the term "at least one of" may mean any combination of the recited items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements. The term "at least one type of" has the same meaning as the term "at least one of".

As used herein, the term "alkyl" means a linear saturated hydrocarbon structure containing 1 to 20 carbon atoms. "Alkyl" also means a branched or cyclic hydrocarbon structure containing 3 to 20 carbon atoms. An alkyl containing a specified quantity of carbon atoms is intended to cover all geometric isomers containing the specified quantity of carbon atoms. Therefore, for example, "butyl" is intended to include n-butyl, sec-butyl, isobutyl, tert-butyl, and cyclobutyl; and "propyl" includes n-propyl, isopropyl, and cyclopropyl. Examples of alkyl include, but are not limited to, methyl, ethyl, n-propyl, isopropyl, cyclopropyl, n-butyl, isobutyl, sec-butyl, tert-butyl, cyclobutyl, n-pentyl, isopentyl, neopentyl, cyclopentyl, methylcyclopentyl, ethylcyclopentyl, n-hexyl, isohexyl, cyclohexyl, n-heptyl, octyl, cyclopropyl, cyclobutyl, norbornyl, and the like.

At high temperature and high voltage, the structural stability of a positive active material is essential to the safety

and longevity of an electrochemical device. However, under high-temperature and high-voltage conditions, the structural stability of high-voltage lithium cobalt oxide deteriorates, and metal ions are prone to dissolve out of a positive electrode and reductively deposit on the surface of a negative electrode, thereby disrupting the structure of the solid electrolyte interphase (SEI) film of the negative electrode, and leading to a continuous increase in the negative electrode impedance and the thickness of the lithium-ion battery. In addition, the electrolyte solution is prone to oxidative decomposition on the surface of the positive electrode to generate a large amount of gas, thereby leading to swelling of the lithium-ion battery and disruption of the electrode interface. Moreover, at high temperature and high voltage, the oxidation activity of the lithium cobalt oxide is high, and the side reactions between the lithium cobalt oxide and the electrolyte solution intensify, thereby resulting in continuous deposition of the decomposition products of the electrolyte solution on the surface of the positive electrode, and increasing the internal resistance of the lithium-ion battery. All these factors adversely affect the voltage drop and safety of the lithium-ion battery.

In the industry, the positive active material (for example, lithium cobalt oxide) is usually doped with a rare earth element to improve electronic conductivity. However, no reports have been found on the doping with rare earth to improve the safety of an electrochemical device. In addition, the propionate ester added in the electrolyte solution is generally intended to regulate viscosity and improve low-temperature performance, and the cyano-containing compound added in the electrolyte solution is mostly intended to suppress the dissolution of positive electrode transition metal ions. Existing knowledge does not tell how the voltage drop and safety performance of an electrochemical device are affected by both a positive active material doped with a rare earth element and an electrolyte solution that contains a propionate ester and a cyano-containing compound.

In this application, the positive active material includes at least one of lanthanum, yttrium, cerium, or tungsten, and the electrolyte solution includes a propionate ester and a cyano-containing compound, thereby solving the problems related to voltage drop and safety performance of the electrochemical device. The applicant hereof unexpectedly finds that the crystalline phase transition of the positive active material (for example, lithium cobalt oxide) can be suppressed by doping the positive active material with rare earth elements such as lanthanum, yttrium, cerium, or tungsten, but at the cost of an increased internal voltage drop of the electrochemical device. The electrolyte solution containing a propionate ester and a cyano-containing compound can effectively suppress the phase transition or exfoliation of the positive active material at high temperature and high voltage, passivate the surface of the positive electrode, and stabilize the bulk phase structure of the positive active material. In addition, with a higher content of the doping element (lanthanum, yttrium, cerium, and/or tungsten) in the positive active material, the crystal structure of the positive active material is more stable at high temperature and high voltage. However, an overly high content of the doping element (for example, higher than 1%) affects the voltage drop of the electrochemical device drastically. Therefore, it is necessary to control the content of the doping elements in the positive active material. The specified combination of the positive active material and the electrolyte solution of this application not only effectively reduces the voltage drop of the electrochemical device at high temperature and high voltage, but also significantly improves the safety (for example, short-circuit safety and thermal abuse safety) of the electrochemical device.

### I. Positive electrode

The positive electrode includes a positive current collector and a positive active material layer formed on the positive current collector. The positive active material layer may be a single layer or a plurality of layers. The positive active material layer includes a positive active material. Each layer in the plurality of positive active material layers may include the same or different positive active materials.

A main characteristic of the electrochemical device of this application is that the positive active material includes a first element. The first element includes at least one of lanthanum, yttrium, cerium, or tungsten. Based on a mass of the positive active material, a mass percentage of the first element is a%, satisfying: $a \leq 1$.

In some embodiments, $0.01 \leq a \leq 1$. In some embodiments, $0.05 \leq a \leq 0.5$. In some embodiments, $0.1 \leq a \leq 0.3$. In some embodiments, a is 0.01, 0.02, 0.05, 0.1, 0.2, 0.3, 0.4, 0.5, 0.6, 0.7, 0.8, 0.9, 1, or falls within a range formed by any two thereof.

In some embodiments, the positive active material further includes a second element. The second element includes at least one of aluminum, magnesium, titanium, or zirconium. When the positive active material includes both the first element (at least one of lanthanum, yttrium, cerium, or tungsten) and the second element (at least one of aluminum, magnesium, titanium, or zirconium), the stability of the crystal structure is increased at high temperature and high voltage, and the interfacial stability can be improved by the combined action of the propionate ester and the cyano-containing compound to suppress oxidative decomposition of the electrolyte solution, thereby further reducing the voltage drop and improving the safety of the electrochemical device at high temperature and high voltage.

In some embodiments, a mass percentage of the positive active material in the positive active material layer is M%, and M ranges from 95 to 99. In some embodiments, M is 95, 96, 97, 98, or 99, or a value falling within a range formed by any two thereof. When the mass percentage of the positive active material in the positive active material layer falls within

the above range, the energy density of the electrochemical device can be increased significantly.

In some embodiments, an average particle size of the positive active material is D μm, and D ranges from 5 to 30. In some embodiments, D ranges from 10 to 25. In some embodiments, D ranges from 12 to 20. In some embodiments, D is 5, 7, 9, 10, 12, 15, 18, 20, 25, or 30, or a value falling within a range formed by any two thereof. When the average particle size of the positive active material falls within the above range, a positive active material of a high tap density can be obtained, and can improve the performance of the electrochemical device. In addition, the positive active material of a high tap density can avoid other problems such as occurrence of streaks in a process of preparing the positive electrode of the electrochemical device (that is, mixing the positive active material, the conductive material, the binder, and the like with a solvent to form a slurry, and applying the slurry as a thin-film coating). In this way, packability of the positive active materials during preparation of the positive electrode can be further increased by mixing two or more types of positive active materials of different average particle sizes.

The average particle size of the positive active material may be determined with a laser diffraction/scattering particle size distribution analyzer. An exemplary measurement method includes: using a HORIBA LA-920 instrument as a particle size distribution analyzer, using a sodium hexametaphosphate aqueous solution of a 0.1% concentration as a dispersion medium for the measurement, ultrasonically dispersing the dispersion medium for 5 minutes, and then setting a measurement refractive index to 1.24 to determine the average particle size. Alternatively, the average particle size of the positive active material may be determined by a laser diffraction particle size analyzer (Shimadzu SALD-2300) and a scanning electron microscope (ZEISS EVO18, with at least 100 specimens selected).

In some embodiments, the positive active material includes at least one of a lithium cobalt oxide or a tungsten-containing ternary positive active material. The lithium cobalt oxide contains at least one of lanthanum, yttrium, or cerium. In some embodiments, the positive active material includes a tungsten-containing lithium nickel cobalt manganese oxide.

A material different from the constituents of the above positive active material may be attached to the surface of the positive active material. Examples of materials attached to the surface may include, but are not limited to: oxides such as aluminum oxide, silicon dioxide, titanium dioxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; carbon; and the like. The attachment of the material onto the surface of the positive active material can suppress oxidation reactions of the electrolyte solution on the surface of the positive active material, and increase the life of the electrochemical device. When the amount of the material attached to the surface is too small, the effect of the material is not fully exhibited. When the amount of the material attached to the surface is too large, the material will hinder movement of lithium ions, and thereby sometimes increase an electrical resistance. In this application, the material whose composition is different from that of the positive active material, which is attached onto the surface of the positive active material, is also referred to as a "positive active material".

In some embodiments, a shape of a particle of the positive active material includes, but is not limited to, a block shape, a polyhedron shape, a spherical shape, an elliptical spherical shape, a plate shape, a needle shape, a column shape, and the like. In some embodiments, particles of the positive active material include primary particles, secondary particles, or a combination thereof. In some embodiments, the primary particles may coalesce into the secondary particles.

The positive conductive material is not limited in type, and may be any known conductive material. Examples of the positive conductive material may include, but are not limited to, graphite such as natural graphite and artificial graphite; carbon black such as acetylene black; carbon materials such as amorphous carbon (for example, needle coke); carbon nanotubes; graphene, and the like. The foregoing positive conductive materials may be used alone or combined arbitrarily.

The positive binder used in manufacturing the positive active material layer is not particularly limited in type. In a case that the binder is applied in a coating manner, any binder material may be used as the positive binder as long as the material is soluble or dispersible in a liquid medium when being used in preparing an electrode. Examples of the positive binder may include, but are not limited to, one or more of: resin polymers such as polyethylene, polypropylene, polyethylene terephthalate, polymethyl methacrylate, polyimide, aramid, cellulose, and nitrocellulose; rubber polymers such as styrene butadiene rubber (SBR), nitrile butadiene rubber (NBR), fluorine rubber, isoprene rubber, polybutadiene rubber, and ethylene-propylene rubber; thermoplastic elastomer polymers such as a styrene-butadiene-styrene block copolymer or a hydrogenated product thereof, an ethylene-propylene-diene terpolymer (EPDM), a styrene-ethylene-butadiene-ethylene copolymer, a styrene-isoprene-styrene block copolymer or a hydrogenated product thereof; soft resinous polymers such as syndiotactic-1,2-polybutadiene, polyvinyl acetate, an ethylene-vinyl acetate copolymer, a propylene-α-olefin copolymer; fluorine-based polymers such as polyvinylidene difluoride (PVDF), polytetrafluoroethylene, fluorinated polyvinylidene difluoride, and a polytetrafluoroethylene-ethylene copolymer; and ion-conductive polymer composites containing alkali metal ions (especially lithium ions). The foregoing positive binders may be used alone or combined arbitrarily.

The solvent used to form a positive electrode slurry is not limited in type, and any solvent is appropriate as long as it can dissolve or disperse the positive active material, the conductive material, the positive binder, and a thickener used as needed. Examples of the solvent used to form the positive electrode slurry may include any one of an aqueous solvent or

an organic solvent. Examples of the aqueous medium solvent may include, but are not limited to, water, and a mixed medium of alcohol and water, and the like. Examples of the organic media solvent include, but are not limited to, aliphatic hydrocarbons such as hexane; aromatic hydrocarbons such as benzene, toluene, xylene, and methyl naphthalene; heterocyclic compounds such as quinoline and pyridine; ketones such as acetone, methyl ethyl ketone, and cyclohexanone; esters such as methyl acetate and methyl acrylate; amines such as diethylene triamine, and N,N-dimethylaminopropylamine; ethers such as diethyl ether, propylene oxide, and tetrahydrofuran (THF); amides such as N-methylpyrrolidone (NMP), dimethylformamide, and dimethylacetamide; and aprotic polar solvents such as hexamethylphosphoramide, and dimethylsulfoxide.

A thickener is usually used to adjust viscosity of a slurry. In a case that an aqueous medium is used, a thickener and a styrene butadiene rubber (SBR) emulsion may be added to make a slurry. The thickener is not particularly limited in type. Examples of the thickener may include, but are not limited to, carboxymethyl cellulose, methyl cellulose, hydroxymethyl cellulose, ethyl cellulose, polyvinyl alcohol, oxidized starch, phosphorylated starch, casein, and a salt thereof, and the like. The foregoing thickeners may be used alone or combined arbitrarily.

The positive current collector is not particularly limited in type, and may be made of any material known as suitable for use in a positive current collector. Examples of the positive current collector may include, but are not limited to, metal materials such as aluminum, stainless steel, nickel plating, titanium, and tantalum; and carbon materials such as carbon cloth and carbon paper. In some embodiments, the positive current collector is made of a metal material. In some embodiments, the positive current collector is made of aluminum.

To reduce an electronic contact resistance of the positive current collector and the positive active material layer, a conductive agent may be contained on a surface of the positive current collector. Examples of the conductive agent may include, but are not limited to, carbon and noble metals such as gold, platinum, and silver.

A positive electrode may be prepared by forming a positive active material layer on a current collector, where the positive active material layer contains a positive active material and a binder. The positive electrode that contains a positive active material may be prepared by a conventional method. To be specific, the method may include: dry-mixing a positive active material, a binder, and, as appropriate, a conductive material and a thickener and the like, so as to form a sheet; and crimping the obtained sheet onto the positive current collector; or dissolving or dispersing such materials into a liquid medium to form a slurry, coating the positive current collector with the slurry, and drying to form a positive active material layer on the current collector, thereby obtaining a positive electrode.

When the positive active material is primary particles, the average particle size of the positive active material means a primary particle size of the particles of the positive active material. When the primary particles of the positive active material particles coalesce to form secondary particles, the average particle size of the positive active material particles means a secondary particle size of the positive active material particles.

**II. Electrolyte solution**

The electrolyte solution used in the electrochemical device of this application includes an electrolyte and a solvent that dissolves the electrolyte. Another main characteristic of the electrochemical device of this application is that the electrolyte solution includes a propionate ester and a cyano-containing compound.

The applicant hereof finds that, when the first element in the positive active material is used together with the propionate ester and the cyano-containing compound in the electrolyte solution, an unexpected enhancement of the stability of the structure and the electrode interface of the positive active material at high voltage can be achieved. Further, a more satisfactory voltage drop can be achieved by regulating the mass percentage of the first element in the positive active material as well as the mass percentage of the propionate ester and the cyano-containing compound in the electrolyte solution. Adjustment of the mass percentage of the first element in the positive active material or the mass percentage of the propionate ester and the cyano-containing compound in the electrolyte solution may cause changes in the structure of the positive electrode material, changes in other constituents and mass percentages thereof in the electrolyte solution, changes in the elements on the surface of the particles of the positive electrode material, changes in the stability of the interface between the positive electrode and the electrolyte solution, and the like, thereby affecting the performance of the entire electrochemical device.

In some embodiments, based on the mass of the electrolyte solution, an aggregate mass percentage of the propionate ester and the cyano-containing compound is b%, and a and b satisfy: $0.1 \le a \times b \le 20$. In some embodiments, a and b satisfy: $0.2 \le a \times b \le 15$. In some embodiments, a and b satisfy: $0.5 \le a \times b \le 10$. In some embodiments, a and b satisfy: $1 \le a \times b \le 5$. In some embodiments, $a \times b$ is 0.1, 0.2, 0.5, 1, 2, 2.5, 3, 3.5, 4, 4.5, 5, 8, 10, 15, 20, or a value falling within a range formed by any two thereof. When the mass percentage of the first element in the positive active material and the aggregate mass percentage of the propionate ester and the cyano-containing compound in the electrolyte solution satisfy the above relationship, the surface defects of the crystal structure of the positive active material can be reduced, thereby effectively suppressing the continuous disruption of the passivation layer on the surface of the positive electrode during the charge-discharge cycles of the electrochemical device, reducing the number of repairs, sufficiently improving

the interfacial stability of the positive active material layer, and in turn, further reducing the voltage drop and improving the safety of the electrochemical device at high temperature and high voltage.

In some embodiments, b ranges from 5 to 65. In some embodiments, b ranges from 10 to 60. In some embodiments, b ranges from 20 to 50. In some embodiments, b ranges from 30 to 40. In some embodiments, b is 5, 7, 8, 10, 15, 20, 25, 30, 35, 40, 45, 50, 55, 60, 65, or a value falling within a range formed by any two thereof.

The propionate ester used as a solvent in the electrolyte solution and the cyano-containing compound used as an additive in the electrolyte solution can not only perform inherent functions separately, but also, as found by the applicant hereof, the propionate ester helps to enhance the passivation effect of the cyano-containing compound on the positive electrode, and makes the formed protection film exhibit a relatively low impedance. This improvement effect is more evident in the positive active material containing the first element.

Based on the mass of the electrolyte solution, the mass percentage of the propionate ester is x%, the mass percentage of the cyano-containing compound is y%, and x and y satisfy: $1 \leq x/y \leq 20$. In some embodiments, $5 \leq x/y \leq 15$. In some embodiments, $10 \leq x/y \leq 12$. In some embodiments, x/y is 1, 3, 5, 8, 10, 13, 15, 18, 20, or a value falling within a range formed by any two thereof. When the mass percentage of the propionate ester and the mass percentage of the cyano-containing compound in the electrolyte solution satisfy the above relationship, the structural stability of the surface of the positive electrode during the charge-discharge cycles is enhanced, thereby further reducing the voltage drop and improving the safety of the electrochemical device at high temperature and high voltage.

In some embodiments, x ranges from 5 to 70. In some embodiments, x ranges from 10 to 60. In some embodiments, x ranges from 20 to 50. In some embodiments, x is 5, 7, 8, 10, 15, 20, 25, 30, 35, 40, 45, 50, 55, 60, 65, 70, or a value falling within a range formed by any two thereof.

In some embodiments, y ranges from 0.1 to 15. In some embodiments, y ranges from 0.5 to 10. In some embodiments, y ranges from 1 to 8. In some embodiments, y ranges from 3 to 5. In some embodiments, y is 0.1, 0.5, 1, 3, 5, 8, 10, 13, 15, or a value falling within a range formed by any two thereof. When the mass percentage of the positive active material in the positive active material layer is increased, the mass percentage of the conductive agent or binder needs to be reduced accordingly. However, this may bring about problems such as lower interfacial stability and lower infiltration capability of the electrolyte solution. The applicant hereof finds that, by adjusting the mass percentage M% of the positive active material and the mass percentage x% of the propionate ester in the electrolyte solution to satisfy $1.5 \leq M/x \leq 18$, higher performance is achieved unexpectedly.

In some embodiments, M and x satisfy: $2 < MIx \leq 15$. In some embodiments, M and x satisfy: $3 \leq MIx \leq 10$. In some embodiments, M and x satisfy: $5 \leq M/x \leq 8$. In some embodiments, MIx is 1.5, 2, 2.5, 3, 3.5, 4, 4.5, 5, 8, 10, 15, 18, or a value falling within a range formed by any two thereof. When the mass percentage of the positive active material in the positive active material layer and the mass percentage of the propionate ester in the electrolyte solution satisfy the above relationship, the structural stability of the surface of the positive electrode during the charge-discharge cycles is enhanced, thereby further reducing the voltage drop and improving the safety of the electrochemical device at high temperature and high voltage.

An appropriate particle size of the positive active material reduces the particle rupture or structural collapse during cycling at high voltage. Used together with the positive active material, the positive electrode film-forming additive possessing a specified chemical framework and/or added at a specified mass percentage can further control the thickness and compactness of the formed film.

In some embodiments, the average particle size D μm the positive active material and the mass percentage y% of the cyano-containing compound in the electrolyte solution satisfy: $1 \leq D/y \leq 20$. In some embodiments, D and y satisfy: $1.5 \leq D/y \leq 15$. In some embodiments, D and y satisfy: $2 \leq D/y \leq 10$. In some embodiments, D and y satisfy the following relationship: $3 \leq D/y \leq 5$. In some embodiments, D/y is 1, 1.5, 2, 2.5, 3, 3.5, 4, 4.5, 5, 8, 10, 15, 20, or a value falling within a range formed by any two thereof. When the average particle size of the positive active material and the mass of the cyano-containing compound in the electrolyte solution satisfy the above relationship, the structural stability of the surface of the positive electrode during the charge-discharge cycles is enhanced, thereby further reducing the voltage drop and improving the safety of the electrochemical device at high temperature and high voltage.

In some embodiments, the propionate ester includes at least one of ethyl propionate or propyl propionate.

In some embodiments, the cyano-containing compound includes at least one of: succinonitrile, glutaronitrile, adiponitrile, 1,5-dicyanopentane, 1,6 -dicyanohexane, tetramethyl succinonitrile, 2-methyl glutaronitrile, 2,4-dimethyl glutaronitrile, 2,2,4,4-tetramethyl glutaronitrile, 1,4-dicyanopentane, 1,2-dicyanobenzene, 1,3-dicyanobenzene, 1,4-dicyanobenzene, ethylene glycol bis(propionitrile)ether, 3,5-dioxa-pimelonitrile, 1,4-bis(cyanoethoxy)butane, diethylene glycol bis(2-cyanoethyl)ether, triethylene glycol bis(2-cyanoethyl)ether, tetraethylene glycol bis(2-cyanoethyl)ether, 1,3-bis(2-cyanoethoxy)propane, 1,4-bis(2-cyanoethoxy)butane, 1,5-bis(2-cyanoethoxy)pentane, ethylene glycol bis(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1 -tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane. The foregoing cyano-containing compounds may be used alone or combined arbitrarily. If the electrolyte solution includes two or more cyano-containing compounds, the mass percentage of the cyano-containing compounds means an aggregate mass percentage of the two or more cyano-containing compounds.

In some embodiments, the electrolyte solution further includes at least one of lithium difluorophosphate or a compound represented by Formula I:

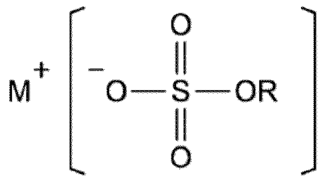

(Formula I)

In the formula above, $M^+$ represents a quaternary ammonium cation or an imidazole cation, and R represents a $C_1$ to $C_5$ alkyl group.

In some embodiments, the compound represented by Formula I includes at least one of: 1-ethyl-3-methylimidazolium methyl sulfate, 1-ethyl-3-methylimidazolium ethyl sulfate, 1,3-dimethylimidazolium methyl sulfate, 1,3-dimethylimidazolium ethyl sulfate, 1-butyl-3-methylimidazolium methyl sulfate, 1-butyl-3-methylimidazolium ethyl sulfate, N-methyl-N-propylpyrrolidinium methyl sulfate, or N-methyl-N-propylpyrrolidinium ethyl sulfate.

When the electrolyte solution includes lithium difluorophosphate and/or the compound represented by Formula I, the surface defects caused by the decomposition and reconstitution of the protection film on the surface of the positive electrode during cycling of the electrochemical device can be further suppressed, thereby further reducing the voltage drop and improving the safety of the electrochemical device at high temperature and high voltage.

In some embodiments, the electrolyte solution further includes at least one of fluoroethylene carbonate, 1,3-propane sultone, ethylene sulfate, vinylene carbonate, or 1-propyl phosphate cyclic anhydride. Such compounds can stabilize the interface between the positive electrode and the electrolyte solution, thereby further reducing the voltage drop and improving the safety of the electrochemical device at high temperature and high voltage.

In some embodiments, the electrolyte solution further includes any nonaqueous solvent known in the prior art for use as a solvent in the electrolyte solution.

In some embodiments, the nonaqueous solvent includes, but is not limited to, one or more of: cyclic carbonate, chain carbonate, cyclic carboxylate, chain carboxylate, cyclic ether, chain ether, a phosphorus-containing organic solvent, a sulfur-containing organic solvent, or an aromatic fluorine-containing solvent.

In some embodiments, examples of the cyclic carbonate may include, but are not limited to, one or more of: ethylene carbonate (EC), propylene carbonate (PC), or butylene carbonate. In some embodiments, the cyclic carbonate contains 3 to 6 carbon atoms.

In some embodiments, examples of the chain carbonate may include, but are not limited to, one or more of: dimethyl carbonate, ethyl methyl carbonate, diethyl carbonate (DEC), methyl n-propyl carbonate, ethyl n-propyl carbonate, di-n-propyl carbonate, or the like. Examples of a fluorinated chain carbonate may include, but are not limited to, one or more of: bis(fluoromethyl)carbonate, bis(difluoromethyl)carbonate, bis(trifluoromethyl)carbonate, bis(2-fluoroethyl)carbonate, bis(2,2-difluoroethyl)carbonate, bis(2,2,2-trifluoroethyl)carbonate, 2-fluoroethyl methyl carbonate, 2,2-difluoroethyl methyl carbonate, 2,2,2-trifluoroethyl methyl carbonate, or the like.

In some embodiments, examples of the cyclic carboxylate may include, but are not limited to, one or more of: gamma-butyrolactone and gamma-valerolactone. In some embodiments, a part of hydrogen atoms of the cyclic carboxylate may be substituted by fluorine.

In some embodiments, examples of the chain carboxylate may include, but are not limited to, one or more of: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, ethyl pivalate, or the like. In some embodiments, a part of hydrogen atoms of the chain carboxylate may be substituted by fluorine. In some embodiments, examples of a fluorinated chain carboxylate may include, but are not limited to, methyl trifluoroacetate, ethyl trifluoroacetate, propyl trifluoroacetate, butyl trifluoroacetate, 2,2,2-trifluoroethyl trifluoroacetate, or the like.

In some embodiments, examples of the cyclic ether may include, but are not limited to, one or more of: tetrahydrofuran, 2-methyl tetrahydrofuran, 1,3-dioxolane, 2-methyl1,3-dioxolane, 4-methyl 1,3-dioxolane, 1,3-dioxane, 1,4-dioxane, or dimethoxypropane.

In some embodiments, examples of the chain ether may include, but are not limited to, one or more of:

dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, 1,2-ethoxymethoxyethane, or the like.

In some embodiments, examples of the phosphorus-containing organic solvent may include, but are not limited to, one or more of: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris(2,2,2-trifluoroethyl) phosphate, tris(2,2,3,3,3-pentafluoropropyl) phosphate, or the like.

In some embodiments, examples of the sulfur-containing organic solvent may include, but are not limited to, one or more of: sulfolane, 2-methyl sulfolane, 3-methyl sulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, or dibutyl sulfate. In some embodiments, a part of hydrogen atoms of the sulfur-containing organic solvent may be substituted by fluorine.

In some embodiments, the aromatic fluorine-containing solvent includes, but is not limited to, one or more of: fluorobenzene, difluorobenzene, trifluorobenzene, tetrafluorobenzene, pentafluorobenzene, hexafluorobenzene, or trifluoromethylbenzene.

In some embodiments, the solvent used in the electrolyte solution in this application includes cyclic carbonate, chain carbonate, cyclic carboxylate, chain carboxylate, and any combination thereof. In some embodiments, the solvent used in the electrolyte solution in this application includes an organic solvent containing a material selected from: ethylene carbonate, propylene carbonate, diethyl carbonate, ethyl propionate, propyl propionate, n-propyl acetate, ethyl acetate, or any combination thereof. In some embodiments, the solvent used in the electrolyte solution according to this application includes: ethylene carbonate, propylene carbonate, diethyl carbonate, ethyl propionate, propyl propionate, gamma-butyrolactone, and any combination thereof.

In some embodiments, the electrolyte is not particularly limited, and may be any material well-known for use as an electrolyte. In a case of a lithium secondary battery, a lithium salt is generally used as the electrolyte. Examples of the electrolyte may include, but are not limited to, inorganic lithium salts such as $LiPF_6$, $LiBF_4$, $LiClO_4$, $LiAlF_4$, $LiSbF_6$, and $LiWF_7$; lithium tungstate such as $LiWOF_5$, carboxylic lithium salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonate salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, cyclic lithium 1,2-perfluoroethane bissulfonimide, cyclic lithium 1,3-perfluoropropane bissulfonimide, and $LiN(CF_3SO_2)(C_4F_9SO_2)$; methylated lithium salts such as $LiC(FSO_2)_3$, $LiC(CF_3SO_2)_3$, and $LiC(C_2F_5SO_2)_3$; (malonato)lithium borate salts such as lithium bis(malonato)borate, and lithium difluoro(malonato)borate; (malonato) lithium phosphate salts such as lithium tris(malonato)phosphate, lithium difluorobis(malonato)phosphate, and lithium tetrafluoro(malonato)phosphate; fluorine-containing organic lithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; (oxalato) lithium borate salts such as lithium difluoro(oxalato)borate and lithium bis(oxalato)borate; and (oxalato) lithium phosphate salts such as lithium tetrafluoro(oxalato)phosphate, lithium difluorobis(oxalato)phosphate, lithium tris(oxalato)phosphate, and the like.

In some embodiments, the electrolyte is selected from $LiPF_6$, $LiSbF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, cyclic lithium 1,2-perfluoroethane bissulfonimide, cyclic lithium 1,3-perfluoropropane bissulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluoro(oxalato)borate, lithium bis(oxalato)borate, or lithium difluorobis(oxalato)phosphate. Such electrolytes improve the output power feature, high-rate charge-discharge feature, high-temperature storage feature, cycling feature, and the like of the electrochemical device.

The mass percentage of the electrolyte is not particularly limited as long as effects of this application are not impaired. In some embodiments, a total molar concentration of lithium in the electrolyte solution is greater than 0.3 mol/L, greater than 0.4 mol/L, or greater than 0.5 mol/L. In some embodiments, the total molar concentration of lithium in the electrolyte solution is less than 3 mol/L, less than 2.5 mol/L, or less than 2.0 mol/L. In some embodiments, the total molar concentration of lithium in the electrolyte solution falls within a range formed by any two of the foregoing values. When the concentration of the electrolyte is within the foregoing ranges, lithium as charged particles will not be deficient, and a viscosity of the lithium will be in an appropriate range, thereby ensuring a high electrical conductivity easily.

When two or more types of electrolytes are in use, the electrolyte includes at least one salt selected from groups consisting of any of monofluorophosphate, borate, oxalate, or fluorosulfonate. In some embodiments, the electrolyte includes a salt selected from groups consisting of any of monofluorophosphate, oxalate, or fluorosulfonate. In some embodiments, the electrolyte includes a lithium salt. In some embodiments, based on a mass of the electrolyte, the mass percentage of the salt selected from the groups consisting of any of monofluorophosphate, borate, oxalate, or fluorosulfonate is greater than 0.01% or greater than 0.1 %. In some embodiments, based on the mass of the electrolyte, the mass percentage of the salt selected from the groups consisting of any of monofluorophosphate, borate, oxalate, or fluorosulfonate is less than 20% or less than 10%. In some embodiments, the content of the salt selected from the groups

consisting of any of monofluorophosphate, borate, oxalate, or fluorosulfonate is within a range formed by any two of the foregoing values.

In some embodiments, the electrolyte contains at least one material selected from groups consisting of any of monofluorophosphate, borate, oxalate, or fluorosulfonate, and a least one type of salt other than the material. The salt other than the material may be a lithium salt exemplified above. In some embodiments, the salt other than the material is $LiPF_6$, $LiN(FSO_2)(CF_3SO_2)$, $LiN(CF_3SO_2)_2$, $LiN(C_2F_5SO_2)_2$, cyclic lithium 1,2-perfluoroethane bissulfonimide, cyclic lithium 1,3-perfluoropropane bissulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, or $LiPF_3(C_2F_5)_3$. In some embodiments, the salt other than the material is $LiPF_6$.

In some embodiments, based on the mass of the electrolyte, the mass percentage of the salt other than the material is greater than 0.01 % or greater than 0.1 %. In some embodiments, based on the mass of the electrolyte, the mass percentage of the salt other than the material is less than 20%, less than 15%, or less than 10%. In some embodiments, the mass percentage of the salt other than the material falls within a range formed by any two of the foregoing values. Added at a mass percentage specified above, the salt other than the material is conducive to balancing the conductivity and viscosity of the electrolyte solution.

### III. Negative electrode

The negative electrode includes a negative current collector and a negative active material layer disposed on one or two surfaces of the negative current collector. The negative active material layer includes a negative active material. The negative active material layer may be one layer or a plurality of layers. Each layer in the multilayer negative active material may contain the same or different negative active materials. The negative active material is any material capable of reversibly intercalating and deintercalating metal ions such as lithium ions. In some embodiments, a chargeable capacity of the negative active material is greater than a discharge capacity of the positive active material, so as to prevent unexpected precipitation of lithium metal on the negative electrode during charging.

The current collector that retains the negative active material may be any well-known current collector. Examples of the negative current collector include, but are not limited to, a metal material such as aluminum, copper, nickel, stainless steel, and nickel-plated steel. In some embodiments, the negative current collector is copper.

When the negative current collector is made of a metal material, the form of the negative current collector may include, but is not limited to, a metal foil, a metal cylinder, a metal coil, a metal sheet, a metal thin film, a metal mesh, stamped metal, foamed metal, and the like. In some embodiments, the negative current collector is a metal thin film. In some embodiments, the negative current collector is a copper foil. In some embodiments, the negative current collector is a calendered copper foil prepared by a calendering method or an electrolytic copper foil prepared by an electrolytic method.

In some embodiments, the thickness of the negative current collector is greater than 1 $\mu$m or greater than 5 $\mu$m. In some embodiments, the thickness of the negative current collector is less than 100 $\mu$m or less than 50 $\mu$m. In some embodiments, the thickness of the negative current collector falls within a range formed by any two of the foregoing values.

The negative active material is not particularly limited, as long as the material can reversibly occlude and release lithium ions. Examples of the negative active material may include, but are not limited to, carbon materials such as natural graphite and artificial graphite; metals such as silicon (Si) and tin (Sn); oxides of metal elements such as Si and Sn; or the like. The negative active materials may be used alone or used in combination.

The negative active material layer may further include a negative binder. The negative binder can strengthen the bonding between the particles of the negative active material and the bonding between the negative active material and the current collector. The type of the negative binder is not particularly limited, as long as the material of the binder is stable to the electrolyte solution or the solvent used in manufacturing the electrode. In some embodiments, the negative binder includes a resin binder. Examples of the resin binder include, but are not limited to, fluororesin, polyacrylonitrile (PAN), polyimide resin, acrylic resin, polyolefin resin, and the like. When a negative electrode slurry is prepared from an aqueous solvent, the negative binder includes, but is not limited to, carboxymethyl cellulose (CMC) or a salt thereof, styrene-butadiene rubber (SBR), polyacrylic acid (PAA) or a salt thereof, polyvinyl alcohol, and the like.

The negative electrode may be prepared by the following method: coating a negative current collector with a negative electrode slurry that contains a negative active material, a resin binder, and the like; drying the slurry, and then calendering the current collector to form a negative active material layer on both sides of the negative current collector, thereby obtaining a negative electrode.

### IV. Separator

To prevent short circuits, a separator is generally disposed between the positive electrode and the negative electrode. In this case, the electrolyte solution of this application generally works by penetrating into the separator.

The material and shape of the separator are not particularly limited as long as they do not significantly impair the

effects of this application. The material of the separator may be resin, glass fiber, an inorganic compound, or the like that is stable to the electrolyte solution of this application. In some embodiments, the separator contains a highly liquid-retaining porous sheet or non-woven fabric shaped material, and the like. Examples of resin or glass fiber used as the separator may include, but are not limited to, polyolefin, aramid, polytetrafluoroethylene, polyethersulfone, and the like. In some embodiments, the polyolefin is polyethylene or polypropylene. In some embodiments, the polyolefin is polypropylene. The foregoing separator materials may be used alone or combined arbitrarily.

The separator may also be made of a material that is formed by stacking the foregoing materials. Examples of such material include, but are not limited to, a three-layer separator formed by sequentially stacking polypropylene, polyethylene, and polypropylene.

Examples of the inorganic compound used as the material of the separator may include, but are not limited to, an oxide such as aluminum oxide and silicon dioxide; a nitride such as aluminum nitride and silicon nitride; and a sulfate salt (such as barium sulfate and calcium sulfate). The shape of the inorganic compound may include, but is not limited to a particle or fiber shape.

The form of the separator may be a thin film form. Examples include, but are not limited to, a non-woven fabric, a woven fabric, a microporous film, and the like. In a case that the separator is in a thin film form, a pore size of the separator is 0.01 μm to 1 μm, and a thickness of the separator is 5 μm to 50 μm. Other than the stand-alone separator described above, a separator made in the following way is also applicable: a separator made by forming a composite porous layer on the surface of the positive electrode and/or the negative electrode by using a resinous binder, where the composite porous layer contains the foregoing inorganic particles. For example, the separator is made by using a fluororesin as a binder so that aluminum oxide particles with a volume median diameter Dv90 less than 1 μm form a porous layer on both sides of the positive electrode.

The thickness of the separator is arbitrary. In some embodiments, the thickness of the separator is greater than 1 μm, greater than 5 μm, or greater than 8 μm. In some embodiments, the thickness of the separator is less than 50 μm, less than 40 μm, or less than 30 μm. In some embodiments, the thickness of the separator is within a range formed by any two of the foregoing values. When the thickness of the separator falls within the foregoing ranges, high insulation and mechanical strength of the separator are ensured, and high rate performance and energy density of the electrochemical device are ensured.

When a porous material such as a porous sheet or non-woven fabric is used as the separator, a porosity of the separator is arbitrary. In some embodiments, the porosity of the separator is greater than 10%, greater than 15%, or greater than 20%. In some embodiments, the porosity of the separator is less than 60%, less than 50%, or less than 45%. In some embodiments, the porosity of the separator is within a range formed by any two of the foregoing values. When the porosity of the separator falls within the foregoing ranges, high insulation and mechanical strength of the separator are ensured, a separator resistance can be suppressed, and high safety performance of the electrochemical device is ensured.

An average pore size of the separator is also arbitrary. In some embodiments, the average pore size of the separator is less than 0.5 μm or less than 0.2 μm. In some embodiments, the average pore size of the separator is greater than 0.05 μm. In some embodiments, the average pore size of the separator is within a range formed by any two of the foregoing values. If the average pore size of the separator exceeds the foregoing ranges, a short circuit is likely to occur. When the average pore size of the separator falls within the foregoing ranges, high safety performance of the electrochemical device is ensured.

### V. Components of the electrochemical device

Components of the electrochemical device include an electrode assembly, a current collection structure, an outer housing, and a protection element.

The electrode assembly may be a stacked structure formed by stacking the positive electrode and the negative electrode that are interspaced with the separator, or a jelly-roll structure formed by spirally winding the positive electrode and the negative electrode that are interspaced with the separator. In some embodiments, a percentage of the volume of the electrode assembly in a total volume inside a battery (hereinafter referred to as "electrode assembly volume percentage") is greater than 40% or greater than 50%. In some embodiments, the electrode assembly volume percentage is less than 90% or less than 80%. In some embodiments, the electrode assembly volume percentage is within a range formed by any two of the foregoing values. When the electrode assembly volume percentage falls within the foregoing range, a high capacity of the electrochemical device is ensured, and deterioration of performance such as charge and discharge cycle performance and high-temperature storage performance is suppressed, where the deterioration of performance is accompanied with an increase of an internal pressure.

The current collection structure is not particularly limited. In some embodiments, the current collection structure is a structure that reduces a resistance of a wiring part and a splicing part. When the electrode assembly is the foregoing stacked structure, it is appropriate to use a structure formed by bundling a metal core part of each electrode layer and welding the bundle to a terminal. When an area of an electrode plate increases, an internal resistance increases.

Therefore, it is appropriate to configure at least 2 terminals in the electrode to reduce the resistance. When the electrode assembly is the jelly-roll structure, at least 2 wiring structures are disposed on the positive electrode and the negative electrode separately and are bundled on the terminals, thereby reducing the internal resistance.

The material of the outer housing is not particularly limited as long as the material is stable to the electrolyte solution in use. The material of the outer housing may be, but is not limited to, a metallic material such as nickel-plated steel, stainless steel, aluminum, aluminum alloy, magnesium alloy, or a laminated film of resin and an aluminum foil. In some embodiments, the outer housing is a metal or laminated film of aluminum or aluminum alloy.

The metallic outer housing includes, but is not limited to, a sealed airtight structure formed by fusing metals to each other by means of laser welding, resistance welding, or ultrasonic welding; or the metallic outer housing is a riveted structure formed by using such metals cushioned by a resin gasket. The outer housing made of the laminated film includes, but is not limited to, a sealed airtight structure formed by thermally bonding resin layers. To increase airtightness, the resin layers may be interspaced with a resin different from the resin used in the laminated film. When the airtight structure is formed by thermally bonding the resin layers through a current collection terminal, in view of the bonding between the metal and the resin, the resin between the resin layers may be a resin that contains a polar group or a modified resin into which a polar group is introduced. In addition, the shape of the outer housing is also arbitrary. For example, the outer housing may be any of the shapes such as a cylindrical shape, a square shape, a laminated shape, a button shape, and a bulk shape.

The protection element may be a positive temperature coefficient (PTC) thermistor, a temperature fuse, or a thermistor, which, in each case, increases a resistance when abnormal heat is emitted or an excessive current is passed; or may be a valve (a current cutoff valve) that cuts off the current in a circuit by rapidly increasing the internal pressure or internal temperature of the battery during abnormal heat emission, or the like. The protection element may be an element that remains idle during routine use under a high current, and may also be designed in a form that prevents abnormal heat radiation or thermal runaway even if no protection element exists.

The electrochemical device of this application includes any device in which an electrochemical reaction occurs. Specific examples of the electrochemical device include a lithium metal secondary battery or a lithium-ion secondary battery.

This application further provides an electronic device containing the electrochemical device according to this application.

The uses of the electrochemical device of this application are not particularly limited, and the electrochemical device may be used in any electronic device known in the prior art. In some embodiments, the electrochemical device of this application is applicable to, but without being limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

By using a lithium-ion battery as an example, the following describes a preparation method of a lithium-ion battery with reference to specific embodiments. A person skilled in the art understands that the preparation methods described in this application are merely examples, and any other appropriate preparation methods still fall within the scope of this application.

## Embodiments

I. Preparing a lithium-ion battery

1. Preparing a negative electrode

Mixing artificial graphite, styrene-butadiene rubber, and sodium carboxymethyl cellulose at a mass ratio of 96%: 2%: 2%, adding deionized water, and stirring well to obtain a negative electrode slurry. Coating a 9 μm-thick copper foil with the negative electrode slurry, drying the slurry, cold-pressing the foil, and then cutting the plate and welding tabs to obtain a negative electrode.

2. Preparing a positive electrode

Performing the following method to prepare a positive active material containing a first element:

(1) Using lithium cobalt oxide as a positive active material: Weighing out a specified amount of $Co_3O_4$ and LiOH powder, mixing and grinding the powder well in an agate mortar, and then calcining the mixture at 900 °C for 10 hours. Adding a specified amount of sulfate or nitrate salt containing a first element into the calcined mixture, adding ethanol

as a solvent, ball-milling the mixture for 10 hours, and then calcining the mixture at 800 °C for 10 hours to obtain a positive active material containing the first element.

(2) Using lithium nickel cobalt manganese oxide as a positive active material: Mixing anhydrous ethanol with deionized water at a volume ratio of 7: 3, adding 0.05 mol of nickel nitrate hexahydrate, 0.02 mol of cobalt nitrate hexahydrate, 0.03 mol of manganese acetate tetrahydrate, and a specified amount of sulfate or nitrate salt containing the first element into the mixture, and then ultrasonically stirring the mixture to dissolve the constituents thoroughly. Transferring the mixed solution into a 500 mL high-pressure reactor, adding 0.6 mol of ammonium bicarbonate into the reactor, heating the reactor to 120 °C, keeping the temperature for 8 hours, and then cooling down, centrifuging and separating the mixture, collecting a precipitate, washing the precipitate with anhydrous ethanol for 3 times, and vacuum-drying the precipitate at 60 °C for 8 hours to produce a nickel-cobalt-manganese hydroxide precursor. Subsequently, stirring and grinding lithium carbonate, tungsten oxide containing the first element, and the prepared cobalt-manganese hydroxide precursor thoroughly, calcining the mixture in a tube furnace at 900 °C for 20 hours, and then cooling down and grinding the calcined product to obtain a positive active material containing a first element.

Mixing the positive active material containing the first element, carbon nanotubes, and polyvinylidene difluoride at a mass ratio of 97: 1: 2, adding N-methyl-pyrrolidone (NMP), and stirring well to obtain a positive electrode slurry. Coating a 12 μm-thick aluminum foil with the positive electrode slurry, drying the slurry, cold-pressing the foil, cutting the plate, and welding tabs to obtain a positive electrode.

3. Preparing an electrolyte solution

Mixing ethylene carbonate (EC), propylene carbonate (PC), and diethyl carbonate (DEC) at a mass ratio of 1: 1: 1 in a dry argon atmosphere, adding $LiPF_6$, and stirring well to form a base electrolyte solution in which the concentration of $LiPF_6$ is 12.5%. Adding additives at different mass percentages into the base electrolyte solution to obtain the electrolyte solutions of different embodiments and comparative embodiments.

The abbreviations and full names of constituents in the electrolyte solution are shown in the following table:

| Material name | Abbreviation | Material name | Abbreviation |
|---|---|---|---|
| Ethylene carbonate | EC | Ethylene carbonate | PC |
| Diethyl carbonate | DEC | Fluoroethylene carbonate | FEC |
| Propyl propionate | PP | Ethyl propionate | EP |
| Succinonitrile | SN | Adiponitrile | ADN |
| Ethylene glycol bis(2-cyanoethyl)ether | EDN | 1,3,6-hexanetricarbonitrile | HTCN |
| 1,2,3-tris(2-cyanoethoxy) propane | TCEP | 1,3-propane sultone | PS |
| 1-ethyl-3-methylimidazolium methyl sulfate | Formula 1 | 1-ethyl-3-methylimidazolium ethyl sulfate | Formula 2 |
| Lithium difluorophosphate | LDP | Ethylene sulfate | DTD |
| Vinylene carbonate | VC | 1-propyl phosphate cyclic anhydride | T3P |

4. Preparing a separator

Using a polyethylene porous polymer film as a separator.

5. Preparing a lithium-ion battery

Winding the obtained positive electrode, separator, and negative electrode in sequence, putting the wound structure into an outer package foil, and leaving an injection hole. Injecting the electrolyte solution through the injection hole, and performing the steps such as sealing, chemical formation, and capacity grading to obtain a lithium-ion battery.

II. Test methods

1. Method for testing the voltage drop of a lithium-ion battery

Charging a lithium-ion battery at 25 °C and a constant current of 1C until the voltage reaches 4.7 V, and then

charging the battery at a constant voltage until the current drops to 0.05C, discharging the battery at a constant current of 1C until the voltage reaches 3.2 V, leaving the battery to stand for 5 minutes, and then measuring the pre-storage voltage. Subsequently, storing the lithium-ion battery at 85 °C for 24 hours, and measuring the post-storage voltage. Calculating the voltage drop of the lithium-ion battery as:

$$\text{voltage drop} = \text{pre-storage voltage} - \text{post-storage voltage}.$$

2. Method for determining a high-temperature short-circuit deformation rate of the lithium-ion battery

Leaving a lithium-ion battery to stand at 25 °C for 30 minutes, and then charging the battery at a constant current rate of 0.5C until the voltage reaches 4.7 V, charging the battery at a constant voltage of 4.7 V until the current drops to 0.05C, leaving the battery to stand for 60 minutes, and measuring a thickness $T_1$ of the lithium-ion battery. Subsequently, short-circuiting the lithium-ion battery for 10 seconds by using a resistance of 100 mΩ, and then measuring the thickness $T_2$ of the lithium-ion battery. Calculating the high-temperature short-circuit deformation rate of the lithium-ion battery as:

$$\text{short-circuit deformation rate} = [(T_2 - T_1)/T_1] \times 100\%.$$

3. Method for testing the thermal abuse thickness expansion rate of the lithium-ion battery

Leaving a lithium-ion battery to stand at 25 °C for 30 minutes, and measuring the thickness $H_1$ of the lithium-ion battery. Subsequently, increasing the temperature at a heating rate of 5 °C/min until 130 °C, keeping the temperature for 30 minutes, and measuring the thickness $H_2$ of the lithium-ion battery at this time. Calculating the thermal abuse thickness expansion rate of the lithium-ion battery as:

$$\text{thickness expansion rate} = [(H_2 - H_1)/H_1] \times 100\%.$$

III. Test results

Table 1 shows the effect of the electrolyte solution on the voltage drop and safety of the lithium-ion battery at high temperature and high voltage. In each embodiment and each comparative embodiment in this table, the positive active material is lithium cobalt oxide containing 0.1% lanthanum.

**Table 1**

| | Propionate ester | | Cyano-containing compound | | Voltage drop (mV) | Short-circuit deformation rate (%) | Thickness expansion rate (%) |
|---|---|---|---|---|---|---|---|
| | Type | Mass percentage x (wt%) | Type | Mass percentage y (wt%) | | | |
| Embodiment 1-1 | PP | 20 | ADN | 3 | 326 | 16.9 | 13.4 |
| Embodiment 1-2 | PP | 5 | ADN | 3 | 334 | 17.8 | 14.7 |
| Embodiment 1-3 | PP | 10 | ADN | 3 | 331 | 17.5 | 14.1 |
| Embodiment 1-4 | PP | 15 | ADN | 3 | 330 | 17.2 | 13.8 |
| Embodiment 1-5 | PP | 25 | ADN | 3 | 316 | 15.8 | 13.1 |
| Embodiment 1-6 | PP | 30 | ADN | 3 | 309 | 15.4 | 12.8 |
| Embodiment 1-7 | PP | 40 | ADN | 3 | 285 | 15.2 | 12.1 |

(continued)

| | Propionate ester | | Cyano-containing compound | | Voltage drop (mV) | Short-circuit deformation rate (%) | Thickness expansion rate (%) |
|---|---|---|---|---|---|---|---|
| | Type | Mass percentage x (wt%) | Type | Mass percentage y (wt%) | | | |
| Embodiment 1-8 | PP | 50 | ADN | 3 | 326 | 17.9 | 16.9 |
| Embodiment 1-9 | EP | 10 | ADN | 3 | 338 | 17.3 | 15.5 |
| Embodiment 1-10 | EP | 20 | ADN | 3 | 335 | 17.1 | 15.2 |
| Embodiment 1-11 | PP | 20 | SN | 4 | 315 | 16.5 | 13.1 |
| Embodiment 1-12 | PP | 20 | END | 2 | 310 | 16.4 | 12.9 |
| Embodiment 1-13 | PP | 20 | HTCN | 1 | 302 | 16.3 | 12.7 |
| Embodiment 1-14 | PP | 20 | TCEP | 1 | 298 | 15.8 | 12.6 |
| Embodiment 1-15 | PP | 20 | ADN<br>SN | 2<br>2 | 273 | 15.6 | 12.3 |
| Embodiment 1-16 | PP | 20 | ADN<br>EDN | 2<br>2 | 265 | 15.3 | 11.3 |
| Embodiment 1-17 | PP | 20 | ADN<br>HTCN | 2<br>1 | 251 | 15.1 | 10.5 |
| Embodiment 1-18 | PP | 20 | ADN<br>TCEP | 2<br>1 | 246 | 14.8 | 9.7 |
| Embodiment 1-19 | PP | 20 | ADN<br>EDN<br>HTCN | 2<br>2<br>1 | 233 | 14.6 | 9.2 |
| Embodiment 1-20 | PP | 20 | ADN<br>EDN<br>TCEP | 2<br>2<br>1 | 226 | 14.2 | 8.4 |
| Embodiment 1-21 | PP | 20 | SN<br>EDN<br>HTCN | 2<br>2<br>1 | 215 | 13.8 | 7.7 |
| Comparative Embodiment 1-1 | PP | 20 | - | - | 412 | 37.9 | 25.9 |
| Comparative Embodiment 1-2 | - | - | ADN | 3 | 425 | 43.2 | 35.1 |
| Comparative Embodiment 1-3 | - | - | - | - | 489 | 56.1 | 47.9 |

As shown in Comparative Embodiments 1-1 to 1-3, although the lithium-ion battery uses lithium cobalt oxide containing 0.1% lanthanum as the positive active material, the electrolyte solution contains neither propionate ester (PP) nor a cyano-containing compound (ADN) or contains just either PP or ADN. Therefore, the lithium-ion battery exhibits a large voltage drop, a large short-circuit deformation rate, and a large thickness expansion rate. The performance of the lithium-ion battery is too low to meet the practical requirements.

As shown in Embodiments 1-1 to 1-21, when the lithium cobalt oxide containing 0.1% lanthanum is used as the positive active material, and when the electrolyte solution contains both a propionate ester (PP) and a cyano-containing compound (ADN, SN, EDN, HTCN, and/or TCEP), the voltage drop, short-circuit deformation rate, and thickness expansion rate of the lithium-ion battery are decreased significantly.

Tables 2 and 3 show how the type and content of the doping elements in the positive active material affect the voltage drop and safety of the lithium-ion battery at high temperature and high voltage. In the embodiments and comparative embodiments set out in Table 2, the lithium cobalt oxide with or without a doping element is used as a positive active material. In the embodiments and comparative embodiments set out in Table 3, the lithium nickel cobalt manganese oxide with or without a doping element is used as a positive active material. The electrolyte solution used in the embodiments and comparative embodiments set out in Table 2 and Table 3 is the same as that used in Embodiment 1-1.

**Table 2**

| | First element | | Second element | | Voltage drop (mV) | Short-circuit deformation rate (%) | Thickness expansion rate (%) |
|---|---|---|---|---|---|---|---|
| | Type | Mass percentage a (wt%) | Type | Mass percentage (wt%) | | | |
| Embodiment 1-1 | La | 0.1 | - | - | 326 | 16.9 | 13.4 |
| Embodiment 2-1 | Y | 0.1 | - | - | 315 | 15.3 | 13.2 |
| Embodiment 2-2 | Ce | 0.1 | - | - | 322 | 15.9 | 13.5 |
| Embodiment 2-3 | W | 0.1 | - | - | 309 | 15.1 | 13.1 |
| Embodiment 2-4 | La<br>Y | 0.1<br>0.1 | - | - | 305 | 14.8 | 13 |
| Embodiment 2-5 | La<br>Ce | 0.1<br>0.1 | - | - | 299 | 14.7 | 12.7 |
| Embodiment 2-6 | La<br>W | 0.1<br>0.1 | - | - | 280 | 14.3 | 12.6 |
| Embodiment 2-7 | La | 0.1 | Al | 0.1 | 276 | 14.2 | 12.8 |
| Embodiment 2-8 | La | 0.1 | Mg | 0.1 | 268 | 14.1 | 12.3 |
| Embodiment 2-9 | La | 0.1 | Ti | 0.1 | 261 | 13.7 | 12.5 |
| Embodiment 2-10 | La | 0.1 | Zr | 0.1 | 255 | 13.4 | 12.7 |
| Embodiment 2-11 | Y | 0.1 | Al | 0.1 | 262 | 13.2 | 12.2 |
| Embodiment 2-12 | Y | 0.1 | Mg | 0.1 | 259 | 13.1 | 12.4 |
| Embodiment 2-13 | Y | 0.1 | Ti | 0.1 | 249 | 12.9 | 12.1 |

(continued)

| | First element | | Second element | | Voltage drop (mV) | Short-circuit deformation rate (%) | Thickness expansion rate (%) |
|---|---|---|---|---|---|---|---|
| | Type | Mass percentage a (wt%) | Type | Mass percentage (wt%) | | | |
| Embodiment 2-14 | Y | 0.1 | Zr | 0.1 | 233 | 12.6 | 12 |
| Embodiment 2-15 | Ce | 0.1 | Zr | 0.1 | 219 | 13.9 | 12.8 |
| Embodiment 2-16 | W | 0.1 | Al | 0.1 | 211 | 12.8 | 11.7 |
| Embodiment 2-17 | W | 0.1 | Mg | 0.1 | 224 | 12.3 | 11.9 |
| Embodiment 2-18 | W | 0.1 | Ti | 0.1 | 231 | 12.1 | 11.6 |
| Embodiment 2-19 | W | 0.1 | Zr | 0.1 | 212 | 11.6 | 10.5 |
| Embodiment 2-20 | La | 0.1 | Al<br>Mg | 0.1<br>0.1 | 201 | 11.4 | 9.7 |
| Embodiment 2-21 | La | 0.1 | Al<br>Ti | 0.1<br>0.1 | 197 | 11.1 | 9.6 |
| Embodiment 2-22 | La | 0.1 | Al<br>Zr | 0.1<br>0.1 | 192 | 10.7 | 9.8 |
| Embodiment 2-23 | W | 0.1 | Al<br>Mg | 0.1<br>0.1 | 189 | 10.5 | 9.5 |
| Embodiment 2-24 | W | 0.1 | Al<br>Ti | 0.1<br>0.1 | 178 | 10.9 | 9.2 |
| Embodiment 2-25 | W | 0.1 | Al<br>Zr | 0.1<br>0.1 | 165 | 10.5 | 9.1 |
| Comparative Embodiment 2-1 | - | - | - | - | 521 | 39.7 | 28.3 |
| Comparative Embodiment 2-2 | - | - | Al | 0.1 | 518 | 24.7 | 25.2 |
| Comparative Embodiment 2-3 | - | - | Mg | 0.1 | 502 | 23.8 | 22.7 |
| Comparative Embodiment 2-4 | - | - | Ti | 0.1 | 513 | 25.9 | 21.9 |
| Comparative Embodiment 2-5 | - | - | Zr | 0.1 | 499 | 25.1 | 22.3 |

**Table 3**

| | First element | | Second element | | Voltage drop (mV) | Short-circuit deformation rate (%) | Thickness expansion rate (%) |
|---|---|---|---|---|---|---|---|
| | Type | Mass percentage a (wt%) | Type | Mass percentage (wt%) | | | |
| Embodiment 3-1 | La | 0.1 | - | - | 345 | 21.8 | 23.8 |
| Embodiment 3-2 | Y | 0.1 | - | - | 355 | 23.1 | 25.3 |
| Embodiment 3-3 | W | 0.1 | - | - | 322 | 22.8 | 24.6 |
| Embodiment 3-4 | La<br>Y | 0.1<br>0.1 | - | - | 315 | 22.1 | 23.8 |
| Embodiment 3-5 | La<br>Ce | 0.1<br>0.1 | - | - | 311 | 21.4 | 22.7 |
| Embodiment 3-6 | La<br>W | 0.1<br>0.1 | - | - | 306 | 20.7 | 21.6 |
| Embodiment 3-7 | La | 0.1 | Al | 0.2 | 309 | 18.9 | 21.2 |
| Embodiment 3-8 | La | 0.1 | Mg | 0.2 | 306 | 18.7 | 20.8 |
| Embodiment 3-9 | La | 0.1 | Ti | 0.1 | 311 | 18.4 | 20.6 |
| Embodiment 3-10 | La | 0.1 | Zr | 0.2 | 297 | 17.8 | 19.5 |
| Embodiment 3-11 | Y | 0.1 | Al | 0.1 | 287 | 17.3 | 19.6 |
| Embodiment 3-12 | Y | 0.1 | Mg | 0.1 | 276 | 16.8 | 19.2 |
| Embodiment 3-13 | Y | 0.1 | Ti | 0.2 | 259 | 16.5 | 18.1 |
| Embodiment 3-14 | Y | 0.1 | Zr | 0.1 | 269 | 16.1 | 17.7 |
| Embodiment 3-15 | Ce | 0.1 | Zr | 0.2 | 257 | 16.4 | 17.5 |
| Embodiment 3-16 | W | 0.1 | Al | 0.2 | 248 | 15.9 | 16.3 |
| Embodiment 3-17 | W | 0.1 | Mg | 0.1 | 243 | 15.7 | 15.1 |
| Embodiment 3-18 | W | 0.1 | Ti | 0.1 | 231 | 15.3 | 16.7 |
| Embodiment 3-19 | W | 0.1 | Zr | 0.1 | 227 | 15.2 | 15.5 |
| Embodiment 3-20 | La | 0.1 | Al<br>Mg | 0.2<br>0.1 | 225 | 14.9 | 15.1 |
| Embodiment 3-21 | La | 0.1 | Al<br>Ti | 0.2<br>0.1 | 213 | 14.7 | 14.8 |

(continued)

| | First element | | Second element | | Voltage drop (mV) | Short-circuit deformation rate (%) | Thickness expansion rate (%) |
|---|---|---|---|---|---|---|---|
| | Type | Mass percentage a (wt%) | Type | Mass percentage (wt%) | | | |
| Embodiment 3-22 | La | 0.1 | Al<br>Zr | 0.2<br>0.1 | 209 | 14.7 | 14.6 |
| Embodiment 3-23 | W | 0.1 | Al<br>Mg | 0.2<br>0.1 | 198 | 14.5 | 14.3 |
| Embodiment 3-24 | W | 0.1 | Al<br>Ti | 0.2<br>0.1 | 187 | 14.3 | 13.8 |
| Embodiment 3-25 | W | 0.1 | Al<br>Zr | 0.2<br>0.1 | 182 | 13.8 | 13.1 |
| Comparative Embodiment 3-1 | - | - | - | - | 437 | 58.9 | 67.9 |
| Comparative Embodiment 3-2 | - | - | Al | 0.2 | 426 | 56.7 | 58.3 |
| Comparative Embodiment 3-3 | - | - | Mg | 0.1 | 411 | 54.3 | 56.2 |
| Comparative Embodiment 3-4 | - | - | Ti | 0.1 | 421 | 51.8 | 56.9 |
| Comparative Embodiment 3-5 | - | - | Zr | 0.1 | 409 | 52.2 | 53.7 |

The results show that when the lithium nickel cobalt manganese oxide with or without a doping element is used as a positive active material, the achieved effect is substantially the same as the effect achieved when the lithium cobalt oxide with or without a doping element is used as a positive active material.

As shown in Comparative Embodiments 2-1 to 2-5 in Table 2 and Comparative Embodiments 3-1 to 3-5 in Table 3, although the electrolyte solution contains a propionate ester (PP) and a cyano-containing compound (ADN), the positive active material does not contain the first element (at least one of lanthanum, yttrium, cerium, or tungsten). In this case, the lithium-ion battery exhibits a large voltage drop, a large short-circuit deformation rate, and a large thickness expansion rate. The safety of the lithium-ion battery is too low to meet the practical requirements.

As shown in Embodiments 1-1 and 2-1 to 2-6 in Table 2 and Embodiments 3-1 to 3-6 in Table 3, when the electrolyte solution contains both a propionate ester (PP) and a cyano-containing compound (ADN), and when the positive active material contains the first element, the voltage drop, short-circuit deformation rate, and thickness expansion rate of the lithium-ion battery are decreased significantly.

As shown in Embodiments 2-7 to 2-25 in Table 2 and Embodiments 3-7 to 3-25 in Table 3, when the electrolyte solution contains a propionate ester (PP) and a cyano-containing compound (ADN), and when the positive active material contains both the first element and the second element, the voltage drop, the short-circuit deformation rate, and the thickness expansion rate of the lithium-ion battery are further decreased.

Table 4 shows how the relationship between the mass percentage a% of the first element in the positive active material and the aggregate mass percentage b% of the propionate ester and the cyano-containing compound in the electrolyte solution affects the voltage drop and safety of the lithium-ion battery at high temperature and high voltage. In each embodiment and each comparative embodiment in this table, the lithium nickel cobalt manganese oxide containing a doping element is used as a positive active material.

**Table 4**

| | First element | | Second element | | Propionate ester | | Cyano-containing compound | | axb | Voltage drop (mV) | Short-circuit deformation rate (%) | Thickness expansion rate (%) |
|---|---|---|---|---|---|---|---|---|---|---|---|---|
| | Type | Mass percentagea (wt%) | Type | Mass percentage (wt%) | Type | Mass percentage (wt%) | Type | Mass percentage (wt%) | | | | |
| Embodiment 4-1 | La | 0.1 | - | - | PP | 20 | ADN | 3 | 2.3 | 347 | 22.8 | 24.6 |
| Embodiment 4-2 | W | 0.1 | - | - | PP | 20 | ADN | 3 | 2.3 | 331 | 21.7 | 18.6 |
| Embodiment 4-3 | La<br>Y | 0.05<br>0.05 | - | - | PP | 20 | ADN | 3 | 2.3 | 315 | 20.9 | 22.8 |
| Embodiment 4-4 | La | 0.1 | Al | 0.05 | PP | 20 | ADN | 3 | 2.3 | 284 | 19.8 | 21.3 |
| Embodiment 4-5 | La | 0.1 | Al | 0.05 | PP | 30 | ADN<br>SN | 3<br>3 | 3.6 | 265 | 18.7 | 20.9 |
| Embodiment 4-6 | La | 0.1 | Mg | 0.05 | PP | 30 | ADN<br>HTCN | 3<br>1 | 3.4 | 255 | 18.5 | 19.7 |
| Embodiment 4-7 | La | 0.2 | Mg | 0.05 | PP | 30 | SN<br>HTCN | 3<br>1 | 6.8 | 243 | 17.2 | 18.5 |
| Embodiment 4-8 | W | 0.2 | Al | 0.05 | PP | 30 | SN<br>HTCN | 3<br>1 | 6.8 | 231 | 17.4 | 18.6 |
| Embodiment 4-9 | W | 0.5 | Zr | 0.05 | PP | 30 | SN<br>HTCN | 3<br>1 | 17 | 219 | 15.9 | 18.3 |
| Embodiment 4-10 | W | 0.5 | Zr | 0.05 | EP | 30 | SN<br>HTCN | 3<br>1 | 17 | 224 | 16.2 | 19.4 |
| Embodiment 4-11 | W | 0.5 | Zr | 0.05 | EP<br>PP | 10<br>20 | SN<br>HTCN | 3<br>1 | 17 | 203 | 14.7 | 15.3 |
| Embodiment 4-12 | W | 0.5 | Zr | 0.05 | PP | 30 | SN<br>HTCN | 3<br>2 | 17.5 | 185 | 13.3 | 13.7 |

(continued)

| | First element | | Second element | | Propionate ester | | Cyano-containing compound | | axb | Voltage drop (mV) | Short-circuit deformation rate (%) | Thickness expansion rate (%) |
|---|---|---|---|---|---|---|---|---|---|---|---|---|
| | Type | Mass percentagea (wt%) | Type | Mass percentage (wt%) | Type | Mass percentage (wt%) | Type | Mass percentage (wt%) | | | | |
| Embodiment 4-13 | W | 1 | - | - | PP | 10 | ADN | 2 | 12 | 309 | 16.2 | 18.9 |
| Embodiment 4-14 | W | 0.01 | - | - | PP | 5 | ADN | 2 | 0.07 | 352 | 22.3 | 21.3 |
| Embodiment 4-15 | W | 1 | - | - | PP | 18 | ADN | 2 | 20 | 318 | 17.9 | 17.5 |
| Embodiment 4-16 | W | 1 | - | - | PP | 55 | ADN | 10 | 65 | 399 | 27.8 | 23.9 |
| Embodiment 4-17 | W | 0.01 | - | - | PP | 8 | ADN | 2 | 0.1 | 343 | 21.5 | 20.6 |

The results show that when the mass percentage a% of the first element in the positive active material and the aggregate mass percentage b% of the propionate ester and the cyano-containing compound in the electrolyte solution satisfy $0.1 \leq a \times b \leq 20$, the voltage drop, short-circuit deformation rate, and thickness expansion rate of the lithium-ion battery are further decreased.

Table 5 shows how the mass percentage relationship between the constituents of the electrolyte solution affects the voltage drop and safety of the lithium-ion battery at high temperature and high voltage. In each embodiment and each comparative embodiment in this table, the lithium nickel cobalt manganese oxide containing 0.1% tungsten is used as a positive active material.

**Table 5**

| | Mass percentage x of PP (wt%) | Mass percentage y of ADN (wt%) | x/y | Voltage drop (mV) | Short-circuit deformation rate (%) | Thickness expansion rate (%) |
|---|---|---|---|---|---|---|
| Embodiment 3-1 | 20 | 3 | 6.67 | 345 | 21.8 | 23.8 |
| Embodiment 5-1 | 5 | 3 | 1.67 | 337 | 21.1 | 20.9 |
| Embodiment 5-2 | 15 | 3 | 5 | 315 | 16.4 | 15.5 |
| Embodiment 5-3 | 30 | 3 | 10 | 267 | 13.4 | 15.1 |
| Embodiment 5-4 | 40 | 3 | 13.3 | 231 | 12.6 | 14.2 |
| Embodiment 5-5 | 60 | 3 | 20 | 289 | 16.8 | 15.9 |
| Embodiment 5-6 | 65 | 3 | 21.7 | 378 | 24.1 | 25.7 |
| Embodiment 5-7 | 30 | 5 | 6 | 257 | 15.3 | 13.8 |
| Embodiment 5-8 | 30 | 8 | 3.75 | 234 | 14.2 | 12.5 |
| Embodiment 5-9 | 30 | 10 | 3 | 215 | 13.2 | 11.9 |
| Embodiment 5-10 | 30 | 15 | 2 | 319 | 15.9 | 15.3 |
| Embodiment 5-11 | 30 | 0.1 | 300 | 352 | 23.3 | 24.2 |
| Embodiment 5-12 | 30 | 16 | 1.875 | 331 | 17.2 | 17.3 |
| Embodiment 5-13 | 30 | 0.08 | 375 | 361 | 23.9 | 24.8 |
| Embodiment 5-14 | 3 | 5 | 0.6 | 367 | 24.9 | 25.3 |

The results show that when the mass percentage x% of the propionate ester in the electrolyte solution and the mass percentage y% of the cyano-containing compound in the electrolyte solution satisfy $1 \leq x/y \leq 20$, the voltage drop, short-circuit deformation rate, and thickness expansion rate of the lithium-ion battery are further decreased.

In addition, when the mass percentage of the propionate ester in the electrolyte solution falls within 5% to 50% and/or the mass percentage of the cyano-containing compound in the electrolyte solution falls within 0.1% to 15%, the voltage drop, short-circuit deformation rate, and thickness expansion rate of the lithium-ion battery are further decreased.

Table 6 shows how the mass percentage M% of the positive active material in the positive active material layer and the mass percentage x% of the propionate ester in the electrolyte solution affect the voltage drop and safety of the lithium-ion battery at high temperature and high voltage. In each embodiment and each comparative embodiment in this table, the lithium nickel cobalt manganese oxide containing 0.1% tungsten is used as a positive active material, and the electrolyte solutions contain PP of different mass percentages and 3% ADN. When M is 97, the positive active material, the carbon nanotubes, and polyvinylidene difluoride are mixed at a mass ratio of 97: 1: 2. When M is 95, the positive active material, the carbon nanotubes, and the polyvinylidene difluoride are mixed at a mass ratio of 95: 2: 3. When M is 96, the positive active material, the carbon nanotubes, and the polyvinylidene difluoride are mixed at a mass ratio of 96: 2: 2. When M is 98, the positive active material, the carbon nanotubes, and the polyvinylidene difluoride are mixed at a mass ratio of 98: 1: 1. When M is 99, the positive active material, the carbon nanotubes, and the polyvinylidene difluoride are mixed at a mass ratio of 99: 0.5: 0.5.

**Table 6**

| | Mass percentage x of PP (wt%) | M (%) | M/x | Voltage drop (mV) | Short-circuit deformation rate (%) | Thickness expansion rate (%) |
|---|---|---|---|---|---|---|
| Embodiment 3-1 | 20 | 97 | 4.85 | 345 | 21.8 | 23.8 |
| Embodiment 6-1 | 30 | 95 | 3.17 | 264 | 15.2 | 12.8 |
| Embodiment 6-2 | 30 | 96 | 3.2 | 256 | 14.6 | 12.4 |
| Embodiment 6-3 | 30 | 97 | 3.23 | 213 | 13.9 | 12.1 |
| Embodiment 6-4 | 30 | 98 | 3.26 | 236 | 12.3 | 11.9 |
| Embodiment 6-5 | 30 | 99 | 3.3 | 224 | 13.2 | 11.7 |
| Embodiment 6-7 | 40 | 97 | 2.4 | 206 | 12.1 | 11.4 |
| Embodiment 6-8 | 50 | 97 | 1.94 | 189 | 11.5 | 11.2 |
| Embodiment 6-9 | 60 | 97 | 1.6 | 351 | 17.8 | 16.8 |
| Embodiment 6-10 | 5.5 | 98 | 17.8 | 357 | 20.5 | 19.4 |
| Embodiment 6-11 | 10 | 97 | 9.7 | 335 | 19.3 | 17.3 |
| Embodiment 6-12 | 6 | 97 | 16.1 | 369 | 21.2 | 19.9 |
| Embodiment 6-13 | 5 | 98 | 19.6 | 371 | 22.9 | 25.3 |
| Embodiment 6-14 | 65 | 97 | 1.49 | 379 | 25.6 | 26.8 |

The results show that when the mass percentage M% of the positive active material in the positive active material layer and the mass percentage x% of the propionate ester in the electrolyte solution satisfy $1.5 \leq M/x \leq 18$, the voltage drop, short-circuit deformation rate, and thickness expansion rate of the lithium-ion battery are further decreased.

Table 7 shows how the particle size D μm of the positive active material in the positive active material layer and the mass percentage y% of the cyano-containing compound in the electrolyte solution affect the safety performance and voltage drop of the lithium-ion battery at high temperature and high voltage. In each embodiment and each comparative embodiment in this table, the lithium nickel cobalt manganese oxide containing 0.1% tungsten is used as a positive active material, and the electrolyte solutions contain 30% PP and cyano-containing compounds of different mass percentages.

**Table 7**

| | Cyano-containing compound (y) | D (μm) | D/y | Voltage drop (mV) | Short-circuit deformation rate (%) | Thickness expansion rate (%) |
|---|---|---|---|---|---|---|
| Embodiment 3-1 | HTCN (3) | 15 | 5 | 345 | 21.8 | 23.8 |
| Embodiment 7-1 | HTCN (0.8) | 15 | 18.75 | 212 | 13.2 | 12.1 |
| Embodiment 7-2 | HTCN (1) | 15 | 15 | 189 | 12.6 | 11.6 |
| Embodiment 7-3 | HTCN (2) | 15 | 7.5 | 175 | 12.1 | 11.3 |
| Embodiment 7-4 | HTCN (4) | 15 | 3.75 | 247 | 11.6 | 10.9 |
| Embodiment 7-5 | HTCN (1) | 10 | 10 | 179 | 10.8 | 10.1 |
| Embodiment 7-6 | HTCN (1) | 20 | 20 | 256 | 12.3 | 11.6 |

(continued)

| | Cyano-containing compound (y) | D (μm) | D/y | Voltage drop (mV) | Short-circuit deformation rate (%) | Thickness expansion rate (%) |
|---|---|---|---|---|---|---|
| Embodiment 7-7 | HTCN (0.8) | 12 | 15 | 267 | 13.1 | 13.5 |
| Embodiment 7-8 | HTCN (1) | 12 | 12 | 334 | 16.8 | 17.8 |
| Embodiment 7-9 | SN (6)<br>AND (6)<br>HTCN (3) | 15 | 1 | 398 | 22.8 | 23.7 |
| Embodiment 7-10 | HTCN (0.1) | 15 | 150 | 412 | 25.6 | 27.6 |
| Embodiment 7-11 | SN (6)<br>AND (6)<br>HTCN (3) | 12 | 0.8 | 431 | 27.2 | 29.1 |

The results show that when the particle size D μm of the positive active material in the positive active material layer and the mass percentage y% of the cyano-containing compound in the electrolyte solution satisfy 1 ≤ D/y ≤ 20, the voltage drop, short-circuit deformation rate, and thickness expansion rate of the lithium-ion battery are further decreased.

Table 8 shows how the additional compounds added in the electrolyte solution affect the safety performance and voltage drop of the lithium-ion battery at high temperature and high voltage. In each embodiment and each comparative embodiment in this table, the lithium nickel cobalt manganese oxide containing 0.1% tungsten is used as a positive active material. The constituents of the electrolyte solution in each embodiment and each comparative embodiment are the same as those in Embodiment 3-1 except the constituents and mass percentage thereof in the electrolyte solution set out in Table 8.

**Table 8**

| | Additional constituents in electrolyte solution | Mass percentage (wt%) | Voltage drop (mV) | Short-circuit deformation rate (%) | Thickness expansion rate (%) |
|---|---|---|---|---|---|
| Embodiment 3-1 | - | - | 345 | 21.8 | 23.8 |
| Embodiment 8-1 | LDP | 0.5 | 257 | 15.6 | 12.7 |
| Embodiment 8-2 | Formula 1 | 0.5 | 239 | 14.3 | 11.9 |
| Embodiment 8-3 | Formula 2 | 0.5 | 230 | 12.9 | 10.5 |
| Embodiment 8-4 | LDP<br>PS | 0.5<br>1 | 221 | 11.5 | 10.1 |
| Embodiment 8-5 | FEC<br>PS | 1<br>1 | 219 | 12.1 | 9.7 |
| Embodiment 8-6 | FEC<br>DTD | 1<br>0.5 | 208 | 11.5 | 8.9 |
| Embodiment 8-7 | FEC<br>VC | 4<br>0.5 | 189 | 11.7 | 8.5 |
| Embodiment 8-8 | FEC<br>T3P | 4<br>1 | 176 | 10.5 | 7.6 |

(continued)

| | Additional constituents in electrolyte solution | Mass percentage (wt%) | Voltage drop (mV) | Short-circuit deformation rate (%) | Thickness expansion rate (%) |
|---|---|---|---|---|---|
| Embodiment 8-9 | FEC<br>PS | 1<br>1 | 204 | 12.2 | 8.1 |

The results show that, on the basis that the electrolyte solution contains a propionate ester and a cyano-containing compound, when the electrolyte solution is further doped with at least one of lithium difluorophosphate, the compound represented by Formula I, fluoroethylene carbonate, 1,3-propane sultone, ethylene sulfate, vinylene carbonate, or 1-propyl phosphate cyclic anhydride, the voltage drop, short-circuit deformation rate, and thickness expansion rate of the lithium-ion battery are further decreased.

References to "embodiments", "some embodiments", "an embodiment", "another example", "example", "specific example" or "some examples" throughout the specification mean that specified features, structures, materials, or characteristics described in such embodiment(s) or example(s) are included in at least one embodiment or example in this application. Therefore, descriptions throughout the specification, which make references by using expressions such as "in some embodiments", "in an embodiment", "in one embodiment", "in another example", "in an example", "in a specific example", or "example", do not necessarily refer to the same embodiment(s) or example(s) in this application. In addition, specific features, structures, materials, or characteristics herein may be combined in one or more embodiments or examples in any appropriate manner.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

## Claims

1. An electrochemical device, comprising: a positive electrode, a negative electrode, and an electrolyte solution, wherein the positive electrode comprises a positive current collector and a positive active material layer formed on the positive current collector, and the positive active material layer comprises a positive active material;

    the positive active material comprises a first element, wherein the first element comprises at least one of lanthanum, yttrium, cerium, or tungsten, and, based on a mass of the positive active material, a mass percentage of the first element is a%, satisfying: $a \leq 1$; and
    the electrolyte solution comprises a propionate ester and a cyano-containing compound.

2. The electrochemical device according to claim 1, wherein the positive active material further comprises a second element, and the second element comprises at least one of aluminum, magnesium, titanium, or zirconium.

3. The electrochemical device according to claim 1, wherein, based on a mass of the electrolyte solution, an aggregate mass percentage of the propionate ester and the cyano-containing compound is b%, and a and b satisfy: $0.1 \leq a \times b \leq 20$.

4. The electrochemical device according to claim 3, wherein $0.2 \leq a \times b \leq 15$.

5. The electrochemical device according to claim 1, wherein $0.01 \leq a \leq 1$.

6. The electrochemical device according to claim 1, wherein, based on a mass of the electrolyte solution, an aggregate mass percentage of the propionate ester and the cyano-containing compound is b%, and b ranges from 5 to 65.

7. The electrochemical device according to claim 1, wherein, based on a mass of the electrolyte solution, a mass percentage of the propionate ester is x%, a mass percentage of the cyano-containing compound is y%, and x and y satisfy: $1 \leq x/y \leq 20$.

8. The electrochemical device according to claim 1, wherein, based on a mass of the electrolyte solution, a mass

percentage of the propionate ester is x%, and x ranges from 5 to 50.

**9.** The electrochemical device according to claim 1, wherein, based on a mass of the electrolyte solution, a mass percentage of the cyano-containing compound is y%, and y ranges from 0.1 to 15.

**10.** The electrochemical device according to claim 1, wherein

a mass percentage of the positive active material in the positive active material layer is M%, and M ranges from 95 to 99; and
based on a mass of the electrolyte solution, a mass percentage of the propionate ester is x%, and
M and x satisfy: $1.5 \leq M/x \leq 18$.

**11.** The electrochemical device according to claim 1, wherein

an average particle size of the positive active material is D $\mu$m, and D ranges from 5 to 30; and
based on a mass of the electrolyte solution, a mass percentage of the cyano-containing compound is y%, and
D and y satisfy: $1 \leq D/y \leq 20$.

**12.** The electrochemical device according to claim 1, wherein the propionate ester comprises at least one of ethyl propionate or propyl propionate.

**13.** The electrochemical device according to claim 1, wherein the cyano-containing compound comprises at least one of: succinonitrile, glutaronitrile, adiponitrile, 1,5-dicyanopentane, 1,6 -dicyanohexane, tetramethyl succinonitrile, 2-methyl glutaronitrile, 2,4-dimethyl glutaronitrile, 2,2,4,4-tetramethyl glutaronitrile, 1,4-dicyanopentane, 1,2-dicyanobenzene, 1,3-dicyanobenzene, 1,4-dicyanobenzene, ethylene glycol bis(propionitrile)ether, 3,5-dioxa-pimelonitrile, 1,4-bis(cyanoethoxy)butane, diethylene glycol bis(2-cyanoethyl)ether, triethylene glycol bis(2-cyanoethyl)ether, tetraethylene glycol bis(2-cyanoethyl)ether, 1,3-bis(2-cyanoethoxy)propane, 1,4-bis(2-cyanoethoxy)butane, 1,5-bis(2-cyanoethoxy)pentane, ethylene glycol bis(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

**14.** The electrochemical device according to claim 1, wherein the electrolyte solution further comprises at least one of lithium difluorophosphate or a compound represented by Formula I:

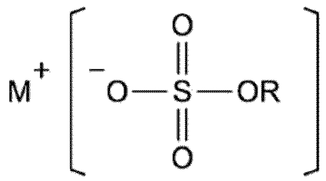

(Formula I)

wherein $M^+$ represents a quaternary ammonium cation or an imidazole cation, and R represents a $C_1$ to $C_5$ alkyl group.

**15.** The electrochemical device according to claim 1, wherein the electrolyte solution further comprises at least one of fluoroethylene carbonate, 1,3-propane sultone, ethylene sulfate, vinylene carbonate, or 1-propyl phosphate cyclic anhydride.

**16.** The electrochemical device according to claim 1, wherein the positive active material comprises at least one of a lithium cobalt oxide or a tungsten-containing ternary positive active material, and the lithium cobalt oxide contains at least one of lanthanum, yttrium, or cerium.

**17.** An electronic device, comprising the electrochemical device according to any one of claims 1 to 16.

## INTERNATIONAL SEARCH REPORT

International application No.
**PCT/CN2021/142396**

**A. CLASSIFICATION OF SUBJECT MATTER**

H01M 4/485(2010.01)i；H01M 4/525(2010.01)i；H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 镧, 钇, 铈, 钨, 丙酸?酯, 氰基, 腈, 含量, 1%, 铝, 镁, 钛, 锆, 粒径, 二氟磷酸锂, 季铵, 咪唑, 氟代碳酸乙烯酯, 1, 3-丙磺酸内酯, 硫酸乙烯酯, 碳酸亚乙烯酯, 1-丙基磷酸环酐, La, Y, Ce, W, Al, Mg, Ti, Zr, particle size, propionate, cyano, nitrile

**C. DOCUMENTS CONSIDERED TO BE RELEVANT**

| Category* | Citation of document, with indication, where appropriate, of the relevant passages | Relevant to claim No. |
|---|---|---|
| Y | CN 113078309 A (NINGDE AMPEREX TECHNOLOGY LTD.) 06 July 2021 (2021-07-06)<br>description, paragraphs [0005]-[0279] | 1-17 |
| Y | CN 112151855 A (NINGDE AMPEREX TECHNOLOGY LTD.) 29 December 2020 (2020-12-29)<br>description, paragraphs [0006]-[0200], and tables 5-6 | 1-17 |
| Y | CN 112151750 A (NINGDE AMPEREX TECHNOLOGY LTD.) 29 December 2020 (2020-12-29)<br>description, paragraphs [0015]-[0167], and table 3 | 1-17 |
| A | CN 113454810 A (NINGDE AMPEREX TECHNOLOGY LTD.) 28 September 2021 (2021-09-28)<br>entire document | 1-17 |
| A | CN 112599761 A (NINGDE AMPEREX TECHNOLOGY LTD.) 02 April 2021 (2021-04-02)<br>entire document | 1-17 |
| A | US 2006046145 A1 (SANYO ELECTRIC CO., LTD.) 02 March 2006 (2006-03-02)<br>entire document | 1-17 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **13 August 2022** | **01 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/142396**

| Patent document cited in search report | Publication date (day/month/year) | Patent family member(s) | Publication date (day/month/year) |
|---|---|---|---|
| CN 113078309 A | 06 July 2021 | None | |
| CN 112151855 A | 29 December 2020 | WO 2022077311 A1 | 21 April 2022 |
| CN 112151750 A | 29 December 2020 | KR 20210057818 A | 21 May 2021 |
| | | US 2022123319 A1 | 21 April 2022 |
| | | WO 2022077850 A1 | 21 April 2022 |
| CN 113454810 A | 28 September 2021 | WO 2022077350 A1 | 21 April 2022 |
| CN 112599761 A | 02 April 2021 | CN 112599761 B | 18 March 2022 |
| US 2006046145 A1 | 02 March 2006 | JP 2006059771 A | 02 March 2006 |

Form PCT/ISA/210 (patent family annex) (January 2015)